# EUROPEAN PATENT APPLICATION

(11) **EP 4 769 526 A1**
(43) Date of publication of application: **01.07.2026**
(21) Application number: 25831130.7
(22) Date of filing: 13.06.2025
(51) Int. Cl.: H01M 4/133, H01M 4/587, H01M 4/62, H01M 4/66, H01M 10/0585, H01M 10/0525, H01M 4/02

(54) **NEGATIVE ELECTRODE FOR ALL-SOLID-STATE BATTERY AND ALL-SOLID-STATE BATTERY INCLUDING SAME**

(30) Priority: 18.06.2024 KR 20240078677; 12.06.2025 KR 20250076835
(71) Applicant: LG Energy Solution, Ltd., Seoul 07335 (KR)
(72) Inventor: HWANG, Sunwoo, Daejeon 34122 (KR); YOM, Jeeho, Daejeon 34122 (KR); HAN, Dakyung, Daejeon 34122 (KR); CHOI, Ran, Daejeon 34122 (KR)
(74) Representative: Goddar, Heinz J.
(86) International application number: PCT/KR2025/008122
(87) International publication number: WO 2025/263916

(57) **Abstract**

The present invention relates to a negative electrode for all-solid-state batteries and an all-solid-state battery including the same, and more specifically, by introducing a porous carbon layer to a negative electrode for all-solid-state batteries including graphite to facilitate the movement of lithium ions, the ion conductivity of the negative electrode for all-solid-state batteries may be improved.

## Description

### Cross-Reference to Related Applications

The present application claims the benefit of priority based on Korean Patent Application No. 10-2024-0078677 filed on June 18, 2024 and Korean Patent Application No. 10-2025-0076835 filed on June 12, 2025, the entire contents of which are incorporated herein by reference as part of this specification.

### Technical Field

The present invention relates to a negative electrode for an all-solid-state battery and an all-solid-state battery including the same.

### BACKGROUND ART

Graphite has been utilized in lithium-ion batteries (LIB) as a negative electrode material that is stable and capable of high-rate charging.

In batteries using conventional liquid electrolytes, the liquid electrolyte easily penetrates into the interior of a negative electrode including graphite, so lithium ions can be easily transferred between graphite in the interior of the negative electrode, and thus ion conductivity in the interior of the negative electrode was excellent.

However, all-solid-state batteries, for which demand has been recently increasing, use solid electrolytes, so there is a problem that it is not easy to secure ion conductivity in the interior of a negative electrode as when using liquid electrolytes.

To resolve this problem, technology has been developed in all-solid-state batteries to introduce solid electrolyte materials into the interior of a negative electrode including graphite and utilize the solid electrolyte as a Li ion path, thereby securing ion conductivity in the interior of the negative electrode. However, when solid electrolyte materials are introduced into the interior of a negative electrode including graphite, phenomena occurred where the process becomes complicated and the energy density of the battery is lowered. In addition, since the solid electrolyte is utilized as a transfer path for lithium ions, it is not easy to secure ion conductivity to the same extent as batteries using conventional liquid electrolytes. Furthermore, side reactions may occur between the solid electrolyte and graphite, which may cause resistance to increase.

Accordingly, in order to use graphite as a negative electrode material for all-solid-state batteries, technology development is needed that can prevent resistance increase in the interior of the negative electrode while simultaneously increasing the ion conductivity of the negative electrode.

### Prior Art Documents

### Patent Documents

(Patent Document 1) Chinese Patent Publication No. 117691060

### SUMMARY OF THE INVENTION

### TECHNICAL PROBLEM

As a result of conducting multifaceted research to solve the above problems, the present inventors confirmed that by introducing a porous carbon layer to a negative electrode for all-solid-state batteries including graphite to facilitate the movement of lithium ions, it is possible to prevent resistance increase of the negative electrode for all-solid-state batteries while simultaneously improving ion conductivity.

Therefore, an objective of the present invention is to provide a negative electrode for all-solid-state batteries in which resistance increase is prevented while ion conductivity is improved.

In addition, another objective of the present invention is to provide an all-solid-state battery including a negative electrode for all-solid-state batteries in which resistance increase is prevented and ion conductivity is improved.

### TECHNICAL SOLUTION

To achieve the above object, the present invention provides a negative electrode for all-solid-state batteries comprising: a negative electrode current collector; a negative electrode active material layer formed on one surface of the negative electrode current collector and comprising graphite; and a porous carbon layer formed on one surface of the negative electrode active material layer.

In one embodiment of the present invention, the present invention provides a negative electrode for all-solid-state batteries, wherein a porosity of the porous carbon layer is 30% to 60%.

In one embodiment of the present invention, the present invention provides a negative electrode for all-solid-state batteries, wherein a thickness of the porous carbon layer is greater than 0 µm and 10 µm or less.

In one embodiment of the present invention, the present invention provides a negative electrode for all-solid-state batteries, wherein the porous carbon layer comprises one or more carbon blacks selected from the group consisting of thermal black, acetylene black, and ketjen black.

In one embodiment of the present invention, the present invention provides a negative electrode for all-solid-state batteries, wherein the negative electrode active material layer further comprises a binder.

In one embodiment of the present invention, the present invention provides a negative electrode for all-solid-state batteries, wherein the binder comprises one or more selected from the group consisting of polyvinylidene fluoride (PVdF), poly(vinylidene fluoride-co-hexafluoropropylene) (PVdF-HFP), and carboxymethyl cellulose (CMC).

In one embodiment of the present invention, the present invention provides a negative electrode for all-solid-state batteries, wherein the binder is included in an amount of 1 to 5 wt% based on the total weight of the negative electrode active material layer.

In one embodiment of the present invention, the present invention provides a negative electrode for all-solid-state batteries, wherein the negative electrode active material layer is Solid Electrolyte-Free (SE-Free).

In one embodiment of the present invention, the present invention provides a negative electrode for all-solid-state batteries, wherein the negative electrode current collector comprises stainless steel (SS), copper (Cu), nickel (Ni), or titanium (Ti).

The present invention also provides an all-solid-state battery comprising: a positive electrode; the negative electrode; and a solid electrolyte membrane interposed between the positive electrode and the negative electrode.

In one embodiment of the present invention, the present invention provides an all-solid-state battery, wherein the solid electrolyte membrane comprises a sulfide-based solid electrolyte.

### EFFECTS OF THE INVENTION

According to the present invention, by introducing a porous carbon layer to a negative electrode for all-solid-state batteries comprising graphite as a negative electrode active material to facilitate the movement of lithium ions, there is an effect that the ion conductivity of the negative electrode for all-solid-state batteries is improved.

In addition, since a separate material for use as a transfer path for lithium ions is not introduced to improve the ion conductivity of the negative electrode for all-solid-state batteries, there is an effect that resistance increase due to side reactions between the negative electrode active material and the separate material for use as a transfer path for lithium ions can be prevented.

### BRIEF DESCRIPTION OF THE DRAWINGS

FIG. 1 is a graph showing cycle retention according to the number of cycles of all-solid-state batteries manufactured in Examples 1, 2 and Comparative Example 1.
FIG. 2 is a graph showing Coulomb efficiency according to the number of cycles of all-solid-state batteries manufactured in Examples 1, 2 and Comparative Example 1.

### BEST MODE FOR CARRYING OUT THE INVENTION

Hereinafter, the present invention will be described in more detail to help understanding of the present invention.

Terms or words used in the present specification and claims should not be interpreted as being limited to conventional or dictionary meanings, and should be interpreted with meanings and concepts consistent with the technical spirit of the present invention based on the principle that the inventor may appropriately define the concepts of terms to describe his or her invention in the best way.

### Negative Electrode for All-Solid-State Battery

The present invention relates to a negative electrode for all-solid-state batteries.

The negative electrode for all-solid-state batteries according to the present invention includes a negative electrode current collector; a negative electrode active material layer formed on one surface of the negative electrode current collector and including graphite; and a porous carbon layer formed on one surface of the negative electrode active material layer.

In one embodiment of the present invention, the porosity of the porous carbon layer may be 30% to 60%.

The porous carbon layer may improve the ion conductivity of the negative electrode by serving as a Li ion path while simultaneously serving to increase oxygen saturation through pores formed therein.

In addition, if the porosity of the porous carbon layer is less than 30%, the degree of improvement in ion conductivity of the negative electrode may be minimal, and if it exceeds 60%, the mechanical properties of the negative electrode may be deteriorated. Specifically, the porosity of the porous carbon layer may be 30% or more, 35% or more, or 40% or more, and may be 60% or less, 55% or less, or 50% or less.

In one embodiment of the present invention, the thickness of the porous carbon layer may be greater than 0 µm and 10 µm or less.

If the thickness of the porous carbon layer is 0 µm, the effect of improving ion conductivity of the negative electrode is minimal and the lifespan characteristics of the battery may be deteriorated when applied to all-solid-state batteries, and if it exceeds 10 µm, it may act as resistance in the battery due to excessive thickness. Specifically, the thickness of the porous carbon layer may be greater than 0 µm, 1 µm or more, 2 µm or more, or 3 µm or more, and may be 10 µm or less, 9 µm or less, 8 µm or less, 7 µm or less, 6 µm or less, or 5 µm or less.

In one embodiment of the present invention, the porous carbon layer may include one or more carbon blacks selected from the group consisting of thermal black, acetylene black and ketjen black. However, the carbon that may be included in the porous carbon layer is not particularly limited as long as it has characteristics of good ion conductivity, low reactivity with lithium ions, and good ion permeability.

In addition, the carbon may be doped with one or more elements selected from the group consisting of nitrogen, boron and phosphorus. Due to the doped form of the carbon, the effect of improving ion conductivity in the interior of the negative electrode may appear more significantly.

In one embodiment of the present invention, the negative electrode active material layer may further include a binder. The binder may be included for bonding between negative electrode active materials and for bonding between the negative electrode active material layer and the porous coating layer.

The binder is not particularly limited as long as it can be used in negative electrodes for all-solid-state batteries. For example, the binder may include one or more selected from the group consisting of polyvinylidene fluoride (PVdF), poly(vinylidene fluoride-co-hexafluoropropylene) (PVdF-HFP), and carboxymethyl cellulose (CMC). In addition, the binder may further include one or more selected from the group consisting of styrene-butadiene rubber, acrylic-modified styrene-butadiene rubber, acrylonitrile copolymer, nitrile butadiene rubber (NBR), acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex rubber, acrylic resin, phenolic resin, epoxy resin, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, and polyurethane.

In addition, the binder may be included in an amount of 1 wt% to 5 wt% based on the total weight of the negative electrode active material layer. Specifically, the content of the binder may be 1 wt% or more, 1.5 wt% or more, or 2 wt% or more, and may be 5 wt% or less, 4.5 wt% or less, 4 wt% or less, 3.5 wt% or less, or 3 wt% or less. If the content of the binder is less than 1 wt%, the adhesion between the negative electrode active material and the negative electrode current collector may be deteriorated, and if it exceeds 5 wt%, although the adhesion is improved, the content of the negative electrode active material decreases accordingly and the battery capacity may be lowered.

In one embodiment of the present invention, the negative electrode active material layer includes graphite as a negative electrode active material.

The graphite may include one or more selected from the group consisting of natural graphite and artificial graphite.

In addition, negative electrode active materials that may be included in addition to the graphite may include materials capable of reversibly intercalating or deintercalating lithium (Li⁺), materials capable of reacting with lithium ions to reversibly form lithium-containing compounds, lithium metal or lithium alloys.

The material capable of reversibly intercalating or deintercalating lithium ions (Li⁺) may be, for example, crystalline carbon, amorphous carbon, or mixtures thereof. The material capable of reacting with lithium ions (Li⁺) to reversibly form lithium-containing compounds may be, for example, tin oxide, titanium nitrate, or silicon. The lithium alloy may be, for example, an alloy of lithium (Li) with a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be lithium metal or lithium-indium alloy (Li-In), and specifically, may be in the form of lithium metal or lithium thin film or lithium-indium alloy thin film or powder.

In addition, a silicon-based negative electrode active material may be further included as the negative electrode active material.

The negative electrode active material may be included in an amount of 95 to 99.5 wt% based on the total weight of the negative electrode active material layer. Specifically, the content of the negative electrode active material may be 95 wt% or more or 96 wt% or more, and may be 99.5 wt% or less or 99 wt% or less. If the content of the negative electrode active material is less than 95 wt%, the performance of the battery may be deteriorated, and if it exceeds 99.5 wt%, mass transfer resistance may increase.

In one embodiment of the present invention, the negative electrode active material layer may further include a conductive material. The conductive material is not particularly limited as long as it prevents side reactions in the internal environment of all-solid-state batteries and has excellent electrical conductivity without causing chemical changes to the battery.

For example, conductive carbon may be used as the conductive material. The conductive carbon may be used alone or in combination of two or more selected from carbon-based materials having a crystal structure of graphene or graphite; conductive fibers such as carbon fiber and metal fiber; fluorinated carbon; metal powders such as aluminum powder and nickel powder; conductive whiskers such as zinc oxide and potassium titanate; conductive oxides such as titanium oxide; and conductive polymers such as polyphenylene derivatives, but is not necessarily limited thereto.

In addition, the conductive material may typically be included in an amount of 0.5 wt% to 3 wt% based on the total weight of the negative electrode active material layer, and specifically, the content of the conductive material may be 0.5 wt% or more, 1 wt% or more, or 1.5 wt% or more, and may be 3 wt% or less, 2.5 wt% or less, or 1 wt% or less. If the content of the conductive material is too small at less than 0.5 wt%, it may be difficult to expect an electrical conductivity improvement effect or the electrochemical characteristics of the battery may be deteriorated, and if it is too large at more than 3 wt%, the amount of negative electrode active material becomes relatively small and capacity and energy density may be deteriorated. The method of incorporating the conductive material into the negative electrode is not particularly limited, and conventional methods known in the art such as mixing with the negative electrode active material, coating, etc. may be used.

In one embodiment of the present invention, the negative electrode active material layer may be Solid Electrolyte-Free (SE-Free).

Generally, in all-solid-state batteries, solid electrolytes are included, and since ion conductivity is not as good compared to batteries including liquid electrolytes, solid electrolytes have been introduced into electrodes to compensate for this, and the solid electrolytes have been made to act as transfer paths for lithium ions. However, there was a problem that solid electrolytes acting as transfer paths for lithium ions caused side reactions with carbon materials included in electrodes and acted as resistance.

On the other hand, since solid electrolytes are not included in the negative electrode for all-solid-state batteries of the present invention, the problem of resistance increase due to solid electrolytes can be prevented.

In one embodiment of the present invention, the negative electrode for all-solid-state batteries may further include a negative electrode current collector, and one surface of the negative electrode current collector may be in contact with one surface of the negative electrode active material layer.

The negative electrode current collector is not particularly limited as long as it has conductivity without causing chemical changes to the battery, and for example, the negative electrode current collector may be copper, stainless steel, aluminum, nickel, titanium, calcined carbon, or copper or stainless steel surface-treated with carbon, nickel, titanium, silver, etc. on the surface thereof, aluminum-cadmium alloy, etc. In addition, like the positive electrode current collector, the negative electrode current collector may be used in various forms such as films, sheets, foils, nets, porous bodies, foams, non-woven fabrics, etc. having fine irregularities formed on the surface.

### Method for Manufacturing Negative Electrode for All-Solid-State Battery

The present invention also relates to a method for manufacturing a negative electrode for all-solid-state batteries.

The method for manufacturing a negative electrode for all-solid-state batteries according to the present invention includes (S1) mixing graphite as a negative electrode active material and a binder in a solvent to form a slurry for forming a negative electrode active material layer; (S2) coating the slurry for forming a negative electrode active material layer on one surface of a negative electrode current collector to form a negative electrode active material layer; and (S3) coating a carbon slurry for forming a porous carbon layer on one surface of the negative electrode active material layer to form a porous carbon layer.

Hereinafter, the method for manufacturing a negative electrode for all-solid-state batteries according to the present invention will be described in more detail for each step.

In one embodiment of the present invention, in the step (S1), graphite as a negative electrode active material and a binder may be mixed in a solvent to form a slurry for forming a negative electrode active material layer. The types and contents of the negative electrode active material and binder are as described above.

The solvent is not particularly limited as long as it is a solvent capable of forming a slurry for forming a negative electrode active material layer. For example, the solvent may be one or more selected from the group consisting of water, alcohol, acetone, dimethyl sulfoxide, formamide and dimethylformamide. The alcohol may include one or more selected from the group consisting of methanol, ethanol and isopropyl alcohol.

In addition, the concentration of the slurry for forming a negative electrode active material layer is not particularly limited as long as it is a concentration that can smoothly perform the coating process. For example, the concentration of the slurry for forming a negative electrode active material layer may be 5 to 30%. If the concentration of the slurry for forming a negative electrode active material layer is less than 5%, the concentration is dilute and the slurry for forming a negative electrode active material layer may flow down without being coated on the substrate, and if it exceeds 30 wt%, the concentration is thick and coating may not be smooth. Specifically, the concentration of the slurry may be 5% or more, 10% or more, or 15% or more, and may be 30% or less or 25% or less. In addition, the concentration may be a concentration based on solid content weight, and the solid content may mean materials included in the slurry other than the solvent.

In one embodiment of the present invention, in the step (S2), the negative electrode active material layer may be formed by coating the slurry for forming a negative electrode active material layer on one surface of a negative electrode current collector.

In addition, after coating the slurry for forming a negative electrode active material layer on the negative electrode current collector, the negative electrode active material layer may be formed through a drying process.

In addition, the coating method is not particularly limited as long as it is a coating method that can be used to form a coating layer in the art. For example, the coating method may be one selected from the group consisting of dip coating, spray coating, spin coating, die coating, gravure coating, micro-gravure coating, comma coating and roll coating.

In addition, the drying temperature may be 100°C to 150°C. If the drying temperature is less than 100°C, drying may not be sufficient to the extent that the negative electrode active material layer is formed, and if it exceeds 150°C, the negative electrode active material layer may be deformed such as being cracked.

In one embodiment of the present invention, in the step (S3), the porous carbon layer may be formed by coating a carbon slurry for forming a porous carbon layer on one surface of the negative electrode active material layer.

The carbon slurry for forming a porous carbon layer may be prepared by mixing carbon in a solvent. The solvent used in preparing the carbon slurry and the concentration of the slurry may be the same as the solvent and concentration of the slurry when preparing the slurry for forming a negative electrode active material layer in the step (S2).

In addition, the coating method may also be the same as described above in the step (S2).

After coating the carbon slurry for forming a porous carbon layer, when drying, the solvent volatilizes and pores are formed inside to form a porous carbon layer. At this time, the more the carbon is in nano units and well dispersed, the more uniform porous structure can be formed.

### All-Solid-State Battery

The present invention also relates to an all-solid-state battery including a negative electrode for all-solid-state batteries.

The all-solid-state battery according to the present invention includes a positive electrode; a negative electrode; and a solid electrolyte membrane interposed between the positive electrode and the negative electrode. The negative electrode means the above-described negative electrode for all-solid-state batteries.

In one embodiment of the present invention, the solid electrolyte membrane included in the all-solid-state battery may include a sulfide-based solid electrolyte. The sulfide-based solid electrolyte is not particularly limited as long as it is a solid electrolyte including sulfur.

For example, the sulfide-based solid electrolyte may be represented by the following Chemical Formula 1:

<Chemical Formula 1> LiₐM_{b}S_{c}X_{d}

In the Chemical Formula 1, M is selected from P, Sn, Sb, As and Ge;
X is selected from Cl, Br and I,
5 ≤ a ≤ 7.5, 0.5 < b ≤ 1.5, 4 < c ≤ 6, and 0.5 < d ≤ 2.

In addition, the solid electrolyte may be in an amorphous state or in a crystalline state. In addition, it may be in a mixed state of amorphous and crystalline.

The solid electrolyte membrane may further include a binder. As the binder material, for example, resins such as acrylonitrile butadiene rubber (NBR), styrene butadiene rubber (SBR), polytetrafluoroethylene, polyvinylidene fluoride, polyethylene, and polyacrylic acid may be mentioned. The binder material may be the same as or different from the material constituting the binder in the positive electrode active material layer and the negative electrode active material layer.

In one embodiment of the present invention, the positive electrode included in the all-solid-state battery includes a positive electrode active material layer, and the positive electrode active material layer may be formed on one surface of a positive electrode current collector.

The positive electrode active material layer includes a positive electrode active material, a conductive material and a binder. In addition, the positive electrode active material layer may additionally include a solid electrolyte.

In addition, the positive electrode active material is not particularly limited as long as it is a material capable of reversibly occluding and releasing lithium ions, and for example, , layered compounds such as lithium cobalt oxide (LiCoO₂), lithium nickel oxide (LiNiO₂), Li[NiₓCo_{y}Mn_{z}Mᵥ]O₂ (in the formula, M is any one element or two or more elements selected from the group consisting of Al, Ga and In; 0.3≤x<1.0, 0≤y, z≤0.5, 0≤v≤0.1, x+y+z+v=1), Li(LiₐM_{b-a-b'}M'_{b'})O_{2-c}A_{c} (in the formula, 0≤a≤0.2, 0.6≤b≤1, 0≤b'≤0.2, 0≤c≤0.2; M includes Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N) or compounds substituted with one or more transition metals; lithium manganese oxides such as compounds of Chemical Formula Li_{1+y}Mn_{2-y}O₄ (where y is 0 to 0.33), LiMnO₃, LiMn₂O₃, LiMnO₂; lithium copper oxide (Li₂CuO₂); vanadium oxides such as LiV₃O₈, LiFe₃O₄, V₂O₅, Cu₂V₂O₇; Ni site-type lithium nickel oxides represented by Chemical Formula LiNi_{1-y}M_{y}O₂ (where M=Co, Mn, Al, Cu, Fe, Mg, B or Ga, and y is 0.01 to 0.3); lithium manganese composite oxides represented by Chemical Formula LiMn_{2-y}M_{y}O₂ (where M is Co, Ni, Fe, Cr, Zn or Ta, and y is 0.01 to 0.1) or Li₂Mn₃MO₈ (where M is Fe, Co, Ni, Cu or Zn); LiMn₂O₄ in which part of Li in the chemical formula is substituted with alkaline earth metal ions; disulfide compounds; Fe₂(MoO₄)₃, etc., but are not limited to these only.

In addition, the positive electrode active material may be included in an amount of 60 to 90 wt% based on the total weight of the positive electrode active material layer. Specifically, the content of the positive electrode active material may be 60 wt%, 65 wt% or more, or 70 wt% or more, and may be 90 wt% or less, 85 wt% or less, or 80 wt% or less. If the content of the positive electrode active material is less than 60 wt%, battery performance may be deteriorated, and if it exceeds 90 wt%, mass transfer resistance may increase.

In addition, the conductive material is not particularly limited as long as it prevents side reactions in the internal environment of all-solid-state batteries and has excellent electrical conductivity without causing chemical changes to the battery, and typically graphite or conductive carbon may be used, for example, graphite such as natural graphite and artificial graphite; carbon blacks such as acetylene black, ketjen black, denka black, thermal black, channel black, furnace black, lamp black, summer black; carbon-based materials having a crystal structure of graphene or graphite; conductive fibers such as carbon fiber and metal fiber; fluorinated carbon; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more, but are not necessarily limited thereto. Preferably, the conductive material may include vapor-grown carbon fiber (VGCF).

The conductive material may typically be included in an amount of 1 wt% to 10 wt% based on the total weight of the positive electrode active material layer, and specifically, the content of the conductive material may be 1 wt% or more, 2 wt% or more, or 3 wt% or more, and may be 10 wt% or less, 9 wt% or less, or 8 wt% or less. If the content of the conductive material is too small at less than 1 wt%, it may be difficult to expect an electrical conductivity improvement effect or the electrochemical characteristics of the battery may be deteriorated, and if it is too large at more than 10 wt%, the amount of positive electrode active material becomes relatively small and capacity and energy density may be deteriorated. The method of incorporating the conductive material into the positive electrode is not particularly limited, and conventional methods known in the art such as mixing with the positive electrode active material, coating, etc. may be used.

In addition, the binder is a component that assists bonding between positive electrode active materials and conductive materials and bonding to the current collector, and may include one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include polytetrafluoroethylene (PTFE).

In addition, the binder may be included in an amount of 1 wt% to 10 wt% based on the total weight of the positive electrode active material layer, and specifically, the content of the binder may be 1 wt% or more, 2 wt% or more, or 3 wt% or more, and may be 10 wt% or less, 9 wt% or less, or 8 wt% or less. If the content of the binder is less than 1 wt%, the adhesion between the positive electrode active material and the positive electrode current collector may be deteriorated, and if it exceeds 10 wt%, although the adhesion is improved, the content of the positive electrode active material decreases accordingly and the battery capacity may be lowered.

In addition, the solid electrolyte may be a sulfide-based solid electrolyte. The sulfide-based solid electrolyte is not particularly limited as long as it is a solid electrolyte including sulfur.

The solid electrolyte may be included in an amount of 5 to 20 wt% based on the total weight of the positive electrode active material layer. When the solid electrolyte is included in the range, ion conductivity may be improved. Specifically, the content of the solid electrolyte may be 5 wt% or more, 6 wt% or more, 7 wt% or more, 8 wt% or more, 9 wt% or more, or 10 wt% or more, and may be 20 wt% or less, 19 wt% or less, 18 wt% or less, 17 wt% or less, 16 wt% or less, 15 wt% or less, 14 wt% or less, 13 wt% or less, or 12 wt% or less.

In addition, the positive electrode current collector supports the positive electrode active material layer and serves to transfer electrons between external leads and the positive electrode active material layer.

The positive electrode current collector is not particularly limited as long as it has high electron conductivity without causing chemical changes to all-solid-state batteries. For example, copper, stainless steel, aluminum, nickel, titanium, palladium, calcined carbon, copper or stainless steel surface-treated with carbon, nickel, silver, etc. on the surface thereof, aluminum-cadmium alloy, etc. may be used as the positive electrode current collector.

The positive electrode current collector may have a fine irregular structure on the surface of the positive electrode current collector or employ a three-dimensional porous structure to strengthen the bonding force with the positive electrode active material layer. Accordingly, the positive electrode current collector may include various forms such as films, sheets, foils, meshes, nets, porous bodies, foams, non-woven fabrics, etc.

The positive electrode as described above may be manufactured according to conventional methods, and specifically, may be manufactured by applying and drying a composition for forming a positive electrode active material layer prepared by mixing a positive electrode active material, a conductive material and a binder in an organic solvent on a positive electrode current collector, and optionally compressing and molding to the current collector to improve electrode density. At this time, it is preferable to use an organic solvent that can uniformly disperse the positive electrode active material, binder and conductive material and is easily evaporated. Specifically, acetonitrile, methanol, ethanol, tetrahydrofuran, water, isopropyl alcohol, etc. may be mentioned.

### Battery Module

The present invention also relates to a battery module including the all-solid-state battery as a unit cell, a battery pack including the battery module, and a device including the battery pack as a power source.

At this time, specific examples of the device include power tools that move by receiving power from electric motors; electric vehicles including Electric Vehicle (EV), Hybrid Electric Vehicle (HEV), Plug-in Hybrid Electric Vehicle (PHEV), etc.; electric twowheeled vehicles including electric bicycles (E-bike) and electric scooters (E-scooter); electric golf carts; power storage systems, etc., but are not limited thereto.

### MODE FOR CARRYING OUT THE INVENTION

Hereinafter, preferred embodiments are presented to help understanding of the present invention, but the following examples are only for illustrating the present invention, and it is obvious to those skilled in the art that various changes and modifications are possible within the scope and technical spirit of the present invention, and it is natural that such changes and modifications belong to the appended claims.

### Example 1

### (1) Manufacturing of Negative Electrode for All-Solid-State Battery

Natural graphite as a negative electrode active material and polyvinylidene fluoride (PVdF) as a binder were mixed at a weight ratio of 97.5:2.5, then a slurry for forming a negative electrode active material layer mixed in ethanol solvent was coated on stainless steel (SS) as a negative electrode current collector, and then dried at 100°C to form a negative electrode active material layer. At this time, the concentration of the slurry for forming a negative electrode active material layer was made to be 20% based on solid content weight. The solid content means natural graphite and binder.

Thereafter, carbon black (Asahi carbon Co., CB78) was mixed in ethanol solvent to prepare a slurry for forming a porous carbon layer. At this time, the concentration of the slurry for forming a porous carbon layer was made to be 20%. The slurry for forming a porous carbon layer was coated on the negative electrode active material layer and dried at 120°C to form a porous carbon layer having a thickness of 9 µm.

### (2) Manufacturing of Positive Electrode for All-Solid-State Battery

80 wt% of LiNi_{0.8}Co_{0.1}Mn_{0.1}O₂ (NCM811) as a positive electrode active material, 11 wt% of Li₆PS₅Cl as a solid electrolyte, 5 wt% of conductive material (Vapor Grown Carbon Fiber, VGCF), and 4 wt% of binder polymer (polyvinylidene fluoride, PVDF) were mixed, and then solvent N-methylpyrrolidone was further added in consideration of viscosity to prepare a positive electrode active material slurry.

The prepared positive electrode active material slurry was applied to an aluminum current collector having a thickness of 20 µm, and then vacuum dried at 120°C for 24 hours to prepare a positive electrode.

### (3) Manufacturing of Solid Electrolyte Membrane

Li₆PS₅Cl having an argyrodite structure as a sulfide-based solid electrolyte and acrylonitrile butadiene rubber (NBR) as a binder were mixed at a weight ratio of 90:10 in butyrate, which is a non-polar solvent, to have a solid content of 50 wt%, thereby preparing a slurry for forming a sulfide-based solid electrolyte membrane.

The slurry for forming a sulfide-based solid electrolyte membrane was applied on a PET (polyethyleneterephthalate) substrate, overcoated with a bar coater, and then vacuum dried at 70°C for 5 hours to form a sulfide-based solid electrolyte membrane.

### (4) Manufacturing of All-Solid-State Battery

An all-solid-state battery was manufactured by interposing the solid electrolyte membrane between the negative electrode for all-solid-state batteries and the positive electrode prepared above.

### Example 2

The same method as Example 1 was performed except that the thickness of the porous carbon layer was made to be 15 µm.

### Comparative Example 1

The same method as Example 1 was performed except that the porous carbon layer was not formed when manufacturing the negative electrode for all-solid-state batteries.

### Experimental Example 1: Battery Performance Measurement

The all-solid-state batteries manufactured in the Examples and Comparative Example were activated in a charge-discharge device at 0.05C for 2 cycles, and then rate capability was observed through a protocol of discharging up to a maximum of 1C. Specifically, rate capability was observed through a protocol of 0.05C CC/CV (Constant Current/Constant Voltage) charging, 0.05C CC (Constant Current) discharging for 2 cycles, and then maintaining the 0.1C CC/CV charging process while CC discharging at 0.1C/0.2C/0.33C/0.5C/1C.

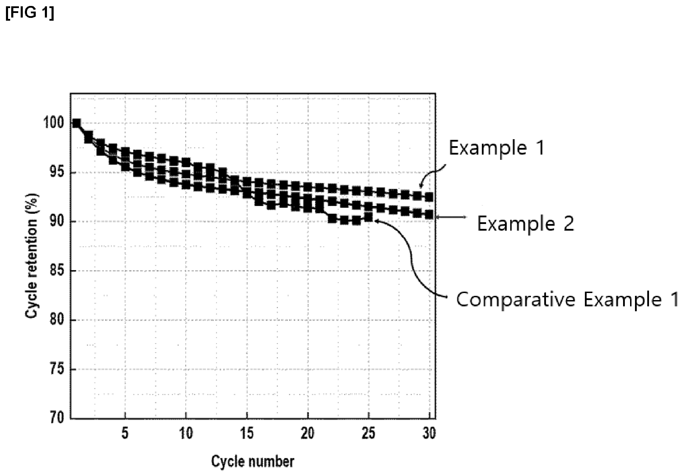

FIG. 1 is a graph showing cycle retention according to the number of cycles of all-solid-state batteries manufactured in Examples 1, 2 and Comparative Example 1. Referring to FIG. 1, it can be seen that Comparative Example 1, in which a carbon layer was not coated on the negative electrode active material layer, shows a rapid deterioration in cycle retention as the number of cycles passes 12 to 13.

In addition, it can be seen that Example 2 has slightly inferior cycle retention compared to Example 1. This can be seen to be due to the thickness of the porous carbon layer in Example 2 becoming thicker compared to Example 1.

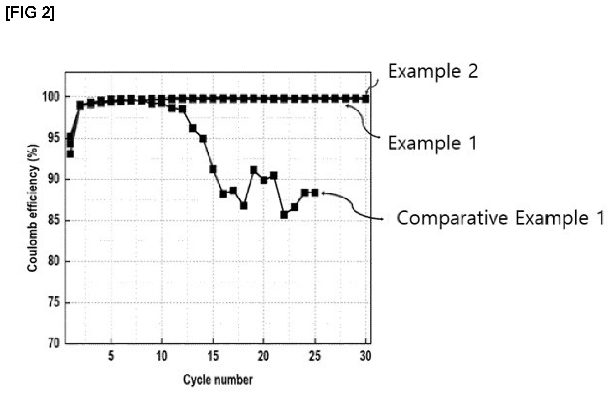

FIG. 2 is a graph showing Coulomb efficiency according to the number of cycles of all-solid-state batteries manufactured in Examples 1, 2 and Comparative Example 1.

Referring to FIG. 2, it was shown that Comparative Example 1, in which a porous carbon layer was not coated on the negative electrode active material layer, had a rapid deterioration in Coulomb efficiency as the charge capacity increased within 15 cycles, resulting in a short circuit. This can be inferred to be due to insufficient securing of ion transfer paths in the negative electrode.

In addition, it can be seen that the cycle retention and Coulomb efficiency of the battery affect each other.

Although the present invention has been described above by limited examples and drawings, the present invention is not limited thereto, and it is obvious that various modifications and variations are possible by those skilled in the art within the technical spirit of the present invention and within the equivalent scope of the claims to be described below.

## Claims

1. A negative electrode for all-solid-state batteries comprising:
a negative electrode current collector;
a negative electrode active material layer formed on one surface of the negative electrode current collector and comprising graphite; and
a porous carbon layer formed on one surface of the negative electrode active material layer.

2. The negative electrode for all-solid-state batteries according to claim 1, wherein a porosity of the porous carbon layer is 30% to 60%.

3. The negative electrode for all-solid-state batteries according to claim 1, wherein a thickness of the porous carbon layer is greater than 0 µm and 10 µm or less.

4. The negative electrode for all-solid-state batteries according to claim 1, wherein the porous carbon layer comprises one or more carbon blacks selected from the group consisting of thermal black, acetylene black and ketjen black.

5. The negative electrode for all-solid-state batteries according to claim 1, wherein the negative electrode active material layer further comprises a binder.

6. The negative electrode for all-solid-state batteries according to claim 5, wherein the binder comprises one or more selected from the group consisting of polyvinylidene fluoride (PVdF), polyvinylidene fluoride-hexafluoropropylene (Poly(vinylidene fluoride-co-hexafluoropropylene), PVdF-HFP) and carboxymethyl cellulose (CMC).

7. The negative electrode for all-solid-state batteries according to claim 5, wherein the binder is included in an amount of 1 to 5 wt% based on a total weight of the negative electrode active material layer.

8. The negative electrode for all-solid-state batteries according to claim 1, wherein the negative electrode active material layer is Solid Electrolyte-Free (SE-Free).

9. The negative electrode for all-solid-state batteries according to claim 1, wherein the negative electrode current collector comprises stainless steel (SS), copper (Cu), nickel (Ni) or titanium (Ti).

10. An all-solid-state battery comprising:
a positive electrode;
the negative electrode of claim 1; and
a solid electrolyte membrane interposed between the positive electrode and the negative electrode.

11. The all-solid-state battery according to claim 10, wherein the solid electrolyte membrane comprises a sulfide-based solid electrolyte.
